(19) **Europäisches Patentamt**
**European Patent Office**
**Office européen des brevets**

(11) **EP 1 865 816 B1**

(12) **EUROPÄISCHE PATENTSCHRIFT**

(45) Veröffentlichungstag und Bekanntmachung des Hinweises auf die Patenterteilung:
**26.01.2011 Patentblatt 2011/04**

(21) Anmeldenummer: **06708190.1**

(22) Anmeldetag: **10.02.2006**

(51) Int Cl.:
*A47J 37/08* (2006.01)

(86) Internationale Anmeldenummer:
**PCT/EP2006/050848**

(87) Internationale Veröffentlichungsnummer:
**WO 2006/103138 (05.10.2006 Gazette 2006/40)**

(54) **SENSORVORRICHTUNG MIT EINER DATENVERARBEITUNGSEINHEIT ZUM BESTIMMEN EINES BRÄUNUNGSGRADS**

SENSOR DEVICE COMPRISING A DATA PROCESSING UNIT FOR DETERMINING THE DEGREE OF BROWNING

DISPOSITIF DE DETECTION COMPRENANT UNE UNITE DE TRAITEMENT DE DONNEES SERVANT A DETERMINER UN DEGRE DE BRUNISSEMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **31.03.2005 DE 102005014713**

(43) Veröffentlichungstag der Anmeldung:
**19.12.2007 Patentblatt 2007/51**

(73) Patentinhaber: **BSH Bosch und Siemens Hausgeräte GmbH**
**81739 München (DE)**

(72) Erfinder:
• **KLEMP, Eric**
**83301 Traunreut (DE)**
• **KRIEG, Gunther**
**76227 Karlsruhe (DE)**
• **SCHEWZOW, Erich**
**75323 Wildbad (DE)**
• **SCHNELL, Wolfgang**
**83308 Trostberg (DE)**
• **ZERASCHI, Monika**
**83301 Traunreut (DE)**

(56) Entgegenhaltungen:
**EP-A- 0 682 243      EP-A- 1 505 349**

**Beschreibung**

Die Erfindung geht aus von einer Sensorvorrichtung mit einer Datenverarbeitungseinheit zum Bestimmen eines Bräunungsgrads nach dem Oberbegriff des Anspruchs 1 sowie von einem Verfahren zum Bestimmen eines Bräunungsgrads nach dem Oberbegriff des Anspruchs 13.

Aus der WO 01 035 58 A1 ist ein Toaster bekannt, der eine Sensorvorrichtung mit einer Datenverarbeitungseinheit zum Bestimmen eines Bräunungsgrads eines in einem Garraum des Toasters angeordneten Garguts, und zwar von Toastbrot, umfasst. Die Sensorvorrichtung umfasst mehrere Sensoren zum Erfassen jeweils einer vom Gargut reflektierten Strahlungsintensität. Abhängig von einem zeitlichen Verlauf der Strahlungsintensitäten erkennt die Datenverarbeitungseinheit selbständig, ob ein Gargut im Garraum angeordnet ist oder nicht.

Eine weitere Sensorvorrichtung ist aus der EP0682243 A bekannt

Der Erfindung liegt die Aufgabe zugrunde, eine Sensorvorrichtung für Gargeräte bereitzustellen, mittels der ein Bräunungsgrad eines Garguts sicher, zuverlässig und insbesondere unabhängig von einer Größe und Form des Garguts bestimmt werden kann.

Die Erfindung geht aus von einer Sensorvorrichtung mit einer Datenverarbeitungseinheit zum Bestimmen eines Bräunungsgrads eines in einem Garraum angeordneten Garguts und mit zumindest einem Sensor zum Erfassen einer vom Gargut reflektierten Strahlungsintensität.

Es wird eine Sensorvorrichtung gemäß Anspruch 1 vorgeschlagen, wobei die Datenverarbeitungseinheit zum Bestimmen eines Relevanzparameters für eine Kenngröße der erfassten Strahlungsintensität abhängig von dem zeitlichen Verlauf der erfassten Strahlungsintensität vorgesehen ist. Es kann sicher erkannt werden, welche der erfassten Strahlungsintensitäten eine Reflexion vom Gargut darstellt und bei welcher der erfassten Strahlungsintensitäten es sich um eine reine Reflexion von metallischen, nicht bräunenden Gegenständen handelt. Es können diejenigen Sensoren als relevant ausgewählt werden, die auf das Gargut fokussiert sind. Dadurch ist ein zuverlässiges Bestimmen des Bräunungsgrads eines im Garraum angeordneten Garguts möglich, und zwar zumindest weitgehend unabhängig von einer Größe und einer Form des Garguts. Neben dem zeitlichen Verlauf kann natürlich auch ein Momentanwert der erfassten Strahlungsintensitäten in die Ermittlung des Bräunungsgrads eingehen.

Als "Bräunungsgrads" wird in diesem Zusammenhang insbesondere eine Rechengröße bezeichnet, die aus der Auswertung einer Oberflächenreflexion gewonnen wird.

Wegen der auftretenden Formen- und Größenvielfalt ist die erfindungsgemäße Sensorvorrichtung besonders gewinnbringend in Backöfen einsetzbar. Prinzipiell ist jedoch auch ein Einsatz in Toastern, Mikrowellengeräten oder Grillgeräten denkbar.

Unter "vorgesehen" soll in diesem Zusammenhang auch "ausgelegt" und "ausgestattet" verstanden werden. Der Bräunungsgrad eines Garguts ist durch Reflexions- und Absorptionseigenschaften des Garguts im Bereich einer Oberfläche, insbesondere innerhalb einer Eindringtiefe von sichtbarem Licht, bestimmt. Dabei beeinflussen neben den Reflexions- und Absorptionseigenschaften im gesamten sichtbaren Spektrum auch räumliche Farbvariationen einen subjektiv von einem Betrachter erfassten bzw. empfundenen Bräunungsgrad. Als Kenngröße für die Strahlungsintensitäten kommt jede, dem Fachmann als sinnvoll erscheinende, abhängig von den Strahlungsintensitäten bestimmte Kenngröße in Betracht.

In einer Weiterbildung der Erfindung wird vorgeschlagen, dass die Datenverarbeitungseinheit dazu vorgesehen ist, ein Verhältnis zwischen der erfassten Strahlungsintensität und wenigstens einem Referenzsignal zu bilden. Es kann erreicht werden, dass sich störende Einflüsse, wie beispielsweise ein Aufgehen von Teig während des Garens und damit ein sich während der Garphase verringernder Abstand zwischen dem Gargut und den Sensoren, aus dem Verhältnis herauskürzen und den erfassten Bräunungsgrad nicht beeinflussen.

Ein besonders zuverlässiges Erfassen des Bräunungsgrads kann erreicht werden, wenn die Sensoren zum Erfassen von zumindest zwei Strahlungsintensitäten aus unterschiedlichen Spektralbereichen vorgesehen sind. Dadurch kann insbesondere ein das menschliche Empfinden in guter Näherung reproduzierender Bräunungsgrad bestimmt werden. Ein Einfluss des Abstands zwischen dem Gargut und den Sensoren kann vollständig eliminiert werden, wenn das Referenzsignal durch eine erfasste Strahlungsintensität in einem Referenzspektralbereich gebildet ist.

Ein besonders stabiles Referenzsignal ist erreichbar, wenn der Referenzspektralbereich Wellenlängen zwischen 800 nm und 1000 nm umfasst bzw. knapp unterhalb des sichtbaren Spektralbereichs liegt. Während bei kürzeren Wellenlängen die Bräunung des Garguts das Referenzsignal stark beeinflussen würde, würde bei größeren Wellenlängen die Wärmestrahlung des Garguts das Referenzsignal verfälschen.

Als Messspektralbereich zum Bestimmen des Bräunungsgrads ist insbesondere ein Spektralbereich geeignet, der Wellenlängen zwischen 400 und 500 nm umfasst. Besonders vorteilhaft ist wenigstens einer der Sensoren zum Erfassen von blauem Licht ausgelegt. In einer besonders kostengünstigen Ausgestaltung der Erfindung sind die Sensoren als Breitband-Sensoren ausgelegt, die sensibel auf ein breites Band von Wellenlängen sind.

Ist die Datenverarbeitungseinheit dazu vorgesehen, aus einer Vielzahl von Kenngrößen für erfasste Strahlungsintensitäten eine Kenngröße mit einer maximalen Änderungsrate auszuwählen, kann unabhängig von einer Art und von einer Position des Garguts flexibel eine Bezugsgröße zum Ermitteln einer Relevanz der Kenngrößen bestimmt werden.

Umfasst die Datenverarbeitungseinheit eine Vergleichseinheit zum Vergleichen eines erfassten Bräunungsgrads mit einem Soll-Bräunungsgrad, kann ein Garprozess abhängig von einem Ergebnis des Vergleichs vorteilhaft bestimmt werden. Beispielsweise kann die Datenverarbeitungseinheit über eine Displayeinheit ein Signal an einen Bediener erzeugen, oder die Datenverarbeitungseinheit kann beim Erreichen des Soll-Bräunungsgrads eine Heizphase des Gargeräts selbsttätig unterbrechen.

Ein Einfluss von Licht, das durch eine Sichtscheibe des Gargeräts eindringt, und Einflüsse von Geschirr bzw. von Backformen und einem Backblech, die im Garraum angeordnet sind, können vermieden werden, wenn die Datenverarbeitungseinheit eine Differenzbildungseinheit zum Bilden einer Differenz zwischen der erfassten Strahlungsintensität und einer Referenzstrahlungsintensität aufweist.

Beispielsweise kann eine zu Beginn eines Garprozesses erfasste Strahlungsintensität als Referenzstrahlungsintensität vorteilhaft genutzt werden.

In einer weiteren Ausgestaltung der Erfindung werden störende Strahlungseinflüsse durch eine Kopplung zwischen Sender und Empfänger eliminiert, wobei die vom Sender emittierte Strahlung gepulst sein kann und der Strahlungsempfänger mit dem Sender synchronisiert ist.

Eine noch weiter gehende Unabhängigkeit von äußeren Einflüssen kann erreicht werden, wenn die Sensorvorrichtung eine Vielzahl von an einer Decke des Garraums angeordneten Strahlereinheiten aufweist. Ein Spektralbereich der Strahlereinheiten kann vorteilhaft auf einen Spektralbereich der Sensoren abgestimmt sein.

Eine stabile und insbesondere temperaturunabhängige von den Strahlereinheiten emittierte Strahlungsintensität kann gewährleistet werden, wenn die Strahlereinheiten über einen Regelkreis zum Regeln der emittierten Strahlungsintensität verfügen. Kostengünstige und stabile Strahlereinheiten können durch den Einsatz von Leuchtdioden, und zwar insbesondere von farbigen Leuchtdioden, realisiert werden. Die von den Strahlereinheiten erzeugte Strahlung kann vorteilhaft durch ein Lichtleitmittel auf das Gargut fokussiert sein.

Eine zumindest weitgehende Unabhängigkeit des erfassten Bräunungsgrads von einer Position des Garguts im Garraum kann erreicht werden, wenn die Sensoren linienförmig in einer Decke des Garraums angeordnet sind. Dabei können in jedem Gitterpunkt mehrere, verschiedenen Spektralbereichen zugeordnete Sensoren und/oder Breitbandsensoren angeordnet sein, oder die verschiedenen Spektralbereichen zugeordneten Sensoren und/oder Breitbandsensoren können gleichmäßig über die lineare Ausdehnung des Sensorarrays verteilt sein.

Ein besonders symmetrisches Sensorarray ist erreichbar, wenn die Sensorvorrichtung zumindest 16 Sensoren zum Erfassen jeweils einer vom Gargut reflektierten Strahlungsintensität umfasst. Ein Einfluss irrelevanter Messgrößen kann vermieden werden, wenn die Datenverarbeitungseinheit zum Bestimmen des Bräunungsgrads die erfassten Strahlungsintensitäten mit dem Relevanzparameter gewichtet. Die Gewichte der verschiedenen Strahlungsintensitäten können entweder diskret bestimmt werden, d.h. nur die Werte null oder eins annehmen, oder aber kontinuierlich variieren. Dabei ist die Summe der Gewichte vorteilhaft einer Erhaltungsgröße.

Eine Konzentration der Datenverarbeitungseinheit auf relevante Strahlungsintensitäten wird erfindungsgemäß dadurch erreicht, dass die Datenverarbeitungseinheit dazu vorgesehen ist, eine der erfassten Strahlungsintensitäten abhängig von dem Relevanzparameter von der Bestimmung des Bräunungsgrads auszuschließen.

Ferner geht die Erfindung aus von einem Verfahren zum Bestimmen eines Bräunungsgrads eines in einem Garraum angeordneten Garguts aus zumindest einer von wenigstens einem Sensor erfassten und vom Gargut reflektierten Strahlungsintensität.

Es wird vorgeschlagen, dass ein Relevanzparameter für eine Kenngröße der erfassten Strahlungsintensität abhängig von dem zeitlichen Verlauf der erfassten Strahlungsintensität bestimmt wird. Dadurch kann der Bräunungsgrad sicher und insbesondere unabhängig von einer Größe und Form des im Garraum angeordneten Garguts bestimmt werden.

Produktionskosten können eingespart werden, wenn die Sensoren und die Strahlereinheiten zu einer Baugruppe zusammengefasst sind.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1    ein Gargerät mit einer Sensorvorrichtung und mit einer Datenverarbeitungs- einheit zum Bestimmen eines Bräunungsgrads,

Fig. 2    eine Decke eines Garraums des Gargeräts aus Figur 1 mit Sensoren und Strahlereinheiten in einer Ansicht von unten,

Fig. 3    ein Backblech mit einem Gargut in einer Ansicht von oben,

Fig. 4    ein Ablaufdiagramm zur Bestimmung eines Bräunungsgrads des Garguts aus den Figuren 1 - 3,

Fig. 5      einen zeitlichen Verlauf zweier Strahlungsintensitäten und eines Verhältnisses der beiden Strahlungsintensitäten sowie einen zeitlichen Verlauf eines Bräu- nungsgrads,

Fig. 6      ein Spektrum reflektierter Strahlungsintensitäten eines Garguts in verschiede- nen Phasen eines Garprozesses und

Fig. 7      eine Decke eines Garraums eines alternativen Gargeräts.

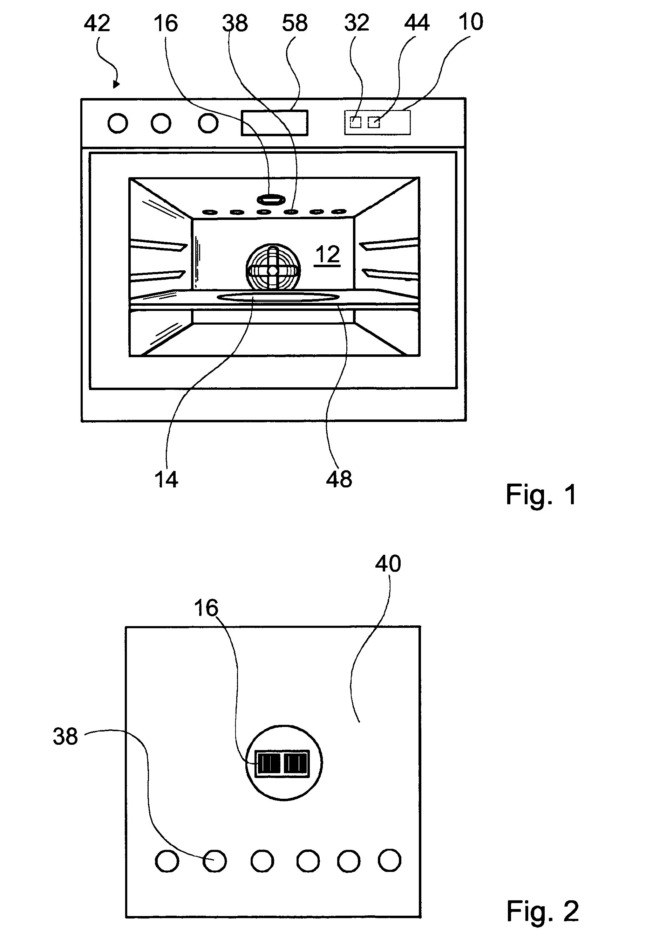

Fig. 1 zeigt ein als Haushaltsbackofen ausgebildetes Gargerät 42 mit einem durch eine Backofentür verschlossenen Garraum 12. Der Garraum 12 ist nach oben durch eine Decke 40 begrenzt, in der sechs in einer Reihe angeordnete Strahlereinheiten 38 eingelassen sind. Ferner weist die Decke 40 insgesamt 16, als Fotodioden ausgebildete Sensoren 16 auf, die in einem Array aus zwei Plättchen mit jeweils 8 Einzelelementen angeordnet sind (Figur 2). Durch die Anordnung der Sensoren 16 im Array kann eine Integralbildung über mehrere Messpunkte der Oberfläche eines Garguts 14 erfolgen.

Das Gargerät 42 umfasst eine als universell programmierbare Recheneinheit ausgebildete Datenverarbeitungseinheit 10, die die Signale der Sensoren 16 abgreift und aus den von den Sensoren 16 erfassten Strahlungsintensitäten 18 einen Bräunungsgrad 24 des im Garraum 12 angeordneten Garguts 14 bestimmt.

Um sicherzustellen, dass das von den Sensoren 16 erfasste Licht zumindest in der Hauptsache vom Gargut 14 reflektiert wurde und nicht von nicht bräunenden Gegenständen im Garraum 12, bestimmt die Datenverarbeitungseinheit 10 einen Relevanzparameter 22 für eine Kenngröße der jeweiligen erfassten Strahlungsintensitäten 18 abhängig von einem zeitlichen Verlauf der erfassten Strahlungsintensitäten 18. Dazu speichert die Datenverarbeitungseinheit 10 in einer Speichereinheit 44 Kenngrößen für den erfassten zeitlichen Verlauf, beispielsweise für eine zeitliche Ableitung der erfassten Strahlungsintensität 18.

Neben den Sensoren 16 weist die Decke 40 sechs in einer Reihe angeordnete Strahlereinheiten 38 auf, die das Gargut 14 mit elektromagnetischen Wellen bestrahlen. Jede der Strahlereinheiten 38 umfasst eine erste Leuchtdiode, die infrarotes Licht in einem Wellenlängenbereich von 880 nm emittiert, und eine zweite Leuchtdiode, die blaues Licht in einem Wellenlängenbereich von 470 nm emittiert.

Die Strahlereinheiten 38 umfassen jeweils einen um 25° zur Decke 40 geneigten Lichtleiter, in den die zwei Leuchtdioden eingekoppelt sind.

Zudem umfasst jede der Strahlereinheiten 38 an einem hinteren Ende des Lichtleiters einen Sensor zum Erfassen der von der im infraroten Bereich arbeitenden Leuchtdiode emittierten Strahlungsintensität.

Das von den Sensoren erfasste Signal wird der Datenverarbeitungseinheit 10 zugeführt, welche die emittierte Strahlungsintensität in einem Regelkreis mit Hilfe des von dem Sensor erfassten Signals auf einen Sollwert regelt. Dadurch kann eine Temperaturabhängigkeit der infraroten Leuchtdiode kompensiert werden und Alterungseinflüsse können herausgeregelt werden.

Die Strahlung der Strahlereinheiten 38 wird vom Gargut 14 teilweise reflektiert und von den Sensoren 16 erfasst. Um einen Einfluss von Strahlung, die von außen in den Garraum 12 des Gargeräts 42 eindringt, zu eliminieren, schaltet die Datenverarbeitungseinheit 10 die Strahlereinheiten 38 in abwechselnden Phasen ein und aus. Nur in Phasen, in denen die Strahlereinheiten 38 aktiv sind, sind auch die Sensoren 16 aktiv.

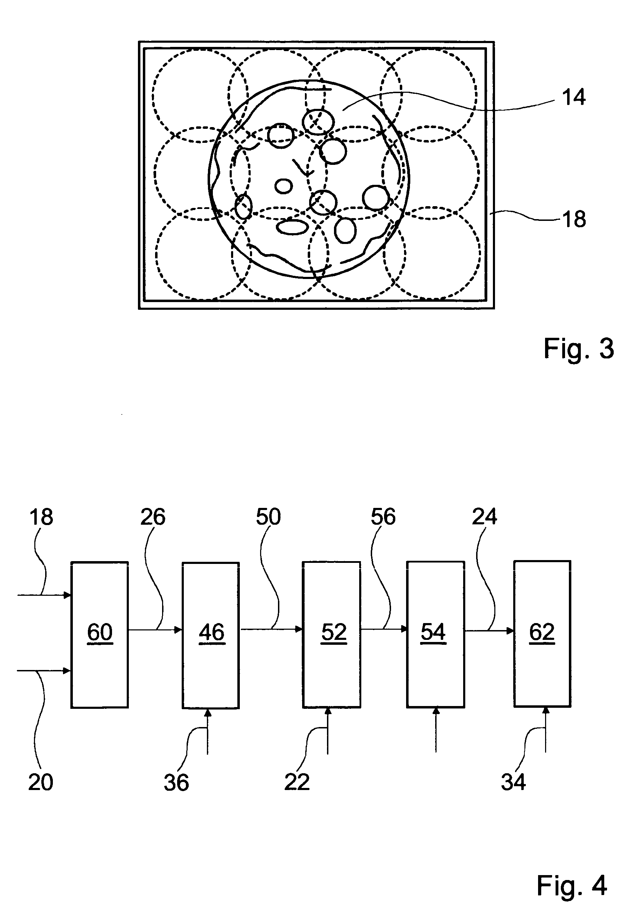

Figur 3 zeigt ein Backblech 48 mit einem als Pizza ausgebildeten Gargut 14. Als gestrichelte Kreise sind die Bereiche dargestellt, in denen die Sensoren 16 sensibel sind. Um die Sensibilität der Sensoren 16 zu fokussieren, sind diese mit einer Linsenoptik ausgestattet. Es ist erkennbar, dass einige, irrelevante Sensoren 16 hauptsächlich Strahlung auffangen, die vom Backblech 48 reflektiert wird, während andere, relevante Sensoren 16 auf eine Bräunung des Garguts 14 ansprechen. Zweck der unten beschriebenen Sensorvorrichtung ist es unter anderem, während des Garprogramms die relevanten Sensoren 16 von den irrelevanten Sensoren 16 selbsttätig zu unterscheiden.

Figur 4 zeigt ein Ablaufdiagramm eines in der Datenverarbeitungseinheit 10 implementierten Programms zur Bestimmung des Bräunungsgrads 24 des Garguts 14. In einem Schritt 60 bildet die Datenverarbeitungseinheit 10 ein Verhältnis aus der erfassten Strahlungsintensität 18 und einer Referenz-Strahlungsintensität 36. Die erfasste Strahlungsintensität 18 hat ihren Schwerpunkt im Bereich von 470 nm, d.h. bei blauem Licht. Zudem weisen die Sensoren 16 jeweils eine als Photodiode ausgebildete Untereinheit auf, die insbesondere auf infrarotes Licht mit einer Wellenlänge von 880 nm empfindlich ist. Das Signal dieser Untereinheiten, die hier nicht explizit dargestellt sind, bildet das Referenzsignal 20. In den folgenden Differenzbildungsschritt 46 geht eine normierte Strahlungsintensität in Form des Verhältnisses 26 und eine in gleicher Weise normierte Referenz-Strahlungsintensität 36 ein. Die ermittelte Differenz 50 ist weitgehend unabhängig von äußeren Strahlungseinflüssen sowie von einem Abstand zwischen dem Gargut 14 und den Sensoren 16. Die Differenz 50 wird in einem Multiplikationsschritt 52 mit dem Relevanzparameter 22 multipliziert, der in einer weiter unten beschriebenen Weise von der Datenverarbeitungseinheit 10 bestimmt ist.

Durch den Einsatz von infrarotem Licht als Referenzsignal können neben den Einflüssen einer Höhenänderung des Garguts 14 auch störende Atmosphäreneinflüsse von Dampf, Dunst, Fetten und/oder Wrasen eliminiert werden.

Eine Normierung der Sensoren 16 bzw. eine Nullmessung erfolgt zu Beginn jedes Garvorgangs. Damit liegen unmittelbar nach der Normierung die von den Sensoren 16 ermittelten Strahlungsintensitäten alle auf einem Niveau.

Die Übertragung der Messsignale der Sensoren 16 zur Datenverarbeitungseinheit 10 erfolgt mit Hilfe eines Vorverstärkers und eines hier nicht dargestellten Multiplexers über einen Hochpassfilter. Um eine Übersprechung zwischen dem Signal der ReferenzStrahlungsintensität 36 und der Strahlungsintensität 18 zu vermeiden, werden die beiden Signale mit unterschiedlichen Frequenzen (33 kHz und 49,5 kHz) synchronisiert und über separate Lock-In-Verstärker verstärkt. Schließlich gibt eine Empfangselektronik der Datenverarbeitungseinheit 10 die Messsignale als Messspannung U aus.

Das Multiplexen und Pulsen der Signale dient insbesondere dem Eliminieren von Fremdlicht, dessen Einflüsse über den Hochpassfilter ausgeschaltet werden. Das Umgebungslicht und die Strahlung der Beheizung des Gargeräts 42 ist in Phase und Frequenz ungerichtet und wird daher eliminiert.

Die Datenverarbeitungseinheit 10 wendet das bisher beschriebene Verfahren auf alle 16 von den Sensoren 16 ermittelten Strahlungsintensitäten 18 an. In einem Zusammenfassungsschritt 54 addiert die Datenverarbeitungseinheit 10 die im Multiplikationsschritt 52 ermittelten, gewichteten Strahlungsintensitäten 56 und dividiert das Ergebnis durch die Summe aller 16 Relevanzparameter 22. Ist die Summe der Relevanzparameter 22 gleich null, gibt die Datenverarbeitungseinheit über eine als Display ausgebildete Anzeigeeinheit 58 eine Fehlermeldung aus und unterbricht das Garprogramm. Als Ergebnis des Zusammenfassungsschritts 54 gibt die Datenverarbeitungseinheit 10 den Bräunungsgrad 24 als Eingangssignal in eine Vergleichseinheit 32, in der die Datenverarbeitungseinheit 10 in einem Schritt 62 den Bräunungsgrad 24 mit einem Soll-Bräunungsgrad 34 vergleicht. Der Soll-Bräunungsgrad 34 ist einem von einem Bediener ausgewählten Garprogramm zugeordnet und ist in der Speichereinheit 44 angelegt. In einem hier nicht näher dargestellten Lernmodus kann der Bediener einen Soll-Bräunungsgrad 34, der seinen Wünschen entspricht, zusammen mit einer Kennung als neues Garprogramm speichern.

Der im Zusammenfassungsschritt 54 ermittelte Bräunungsgrad 24 ist gegeben durch

$$B = 1 - (F_{Mess}/F_{Ref}) \cdot (F_{Power}).$$

Dabei bezeichnet B den Bräunungsgrad 24, $F_{Mess}$ gibt das Verhältnis der Strahlungsintensität 18 zum Zeitpunkt der Messung zu der Strahlungsintensität 18 zu Beginn des Garprogramms an, $F_{Ref}$ gibt das Verhältnis der Referenz-Strahlungsintensität 36 zum Zeitpunkt der Messung zu der Referenz-Strahlungsintensität 36 zu Beginn des Garprogramms an und $F_{Power}$ ist ein Korrekturfaktor, in den die von den in den Strahlereinheiten 38 integrierten Sensoren erfassten Strahlungsleistungen in den verschiedenen Spektralbereichen 28, 30 zu Beginn des Garprogramms und zum Zeitpunkt der Messung eingehen.

Der Bräunungsgrad 24 wird mit einer Abtastfrequenz von 12 s von Komplettmessung zu Komplettmessung bestimmt. Ein Empfänger der Datenverarbeitungseinheit 10 befindet sich in einem geschlossenen Gehäuse zur Abschirmung von elektromagnetischen Wellen.

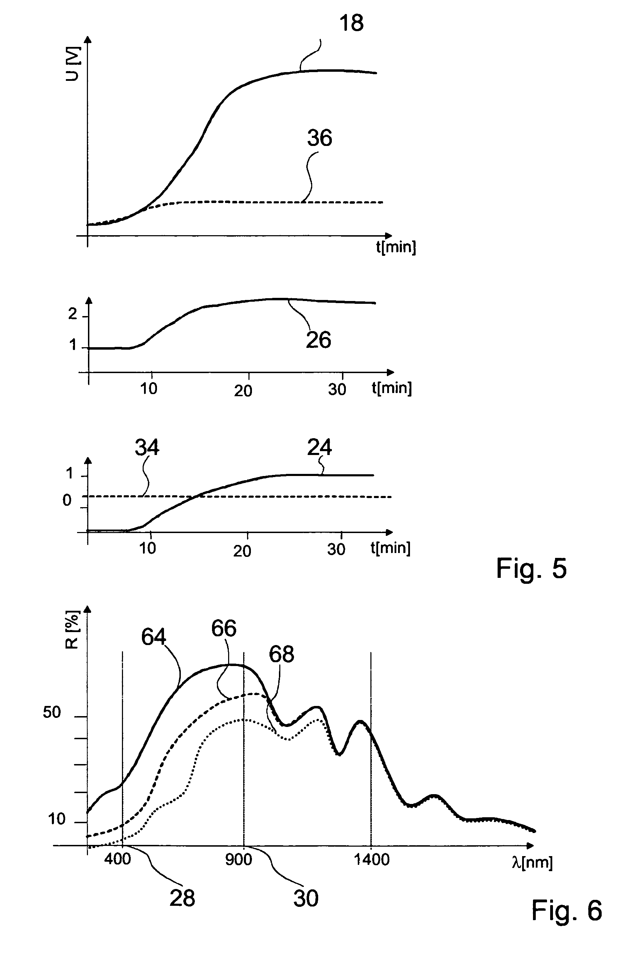

Figur 5 zeigt den zeitlichen Verlauf der von einem der Sensoren 16 erfassten Strahlungsintensität 18 und der entsprechenden Referenz-Strahlungsintensität 36. Ein anfänglicher Anstieg der Referenz-Strahlungsintensitäten 36 rührt von einem Aufgehen des Garguts 14 und einer damit einhergehenden Verringerung des Abstands zwischen dem Gargut 14 und dem entsprechenden Sensor 16 her. Dieser Anstieg ist in dem ebenfalls in Figur 5 dargestellten Verhältnis 26 nicht mehr sichtbar. Ebenfalls dargestellt ist die Strahlungsintensität 18 eines Sensors 16, dessen Sensibilitätsbereich außerhalb des Garguts 14 liegt.

Zur Kalibrierung der Sensoren 16 wird in einem Kalibrierungsverfahren, auf das hier nicht im Detail eingegangen werden soll, weißes Papier in den Garraum eingebracht und zu jedem der 16 Sensoren 16 in der Speichereinheit 44 ein Kalibrierungswert gespeichert, der umgekehrt proportional zu den im Kalibrierungsverfahren ausgegebenen Messsignalen der Sensoren 16 ist. Die Messsignale der Sensoren 16 werden im Normalbetrieb mit dem Kalibrierungswert multipliziert.

Die Datenverarbeitungseinheit 10 bildet für jeden der Sensoren 16 eine über eine Anfangsphase eines Garprozesses gemittelte relative Änderungsrate bzw. logarithmische Ableitung der von dem entsprechenden Sensor 16 erfassten Strahlungsintensität 18. Die gemittelte Änderungsrate dient als Kenngröße für eine Änderungsrate der Strahlungsintensität 18. Anschließend bestimmt die Datenverarbeitungseinheit 10 aus den ermittelten Änderungsraten ein Betragsmaximum und vergleicht die übrigen 15 Werte der Änderungsraten mit dem Wert der maximalen Änderungsrate. Durch das Bilden des Betragsmaximums wählt die Datenverarbeitungseinheit 10 aus einer Vielzahl von Kenngrößen für erfasste Strahlungsintensitäten 18 eine Kenngröße mit einer maximalen Änderungsrate aus.

Macht die betrachtete relative Änderungsrate weniger als 20 % der ausgewählten maximalen Änderungsrate aus, erkennt die Datenverarbeitungseinheit 10, dass der entsprechende Sensor 16 hauptsächlich Strahlung erfasst, die vom Backblech 48 reflektiert wurde. Die Datenverarbeitungseinheit 10 setzt den Relevanzparameter 22 der entsprechenden Strahlungsintensität 18 dann auf den Wert null. Liegt der Wert der betrachteten Änderungsrate dagegen oberhalb des in der Speichereinheit 44 gespeicherten Schwellenwerts von 20 %, setzt die Datenverarbeitungseinheit 10 den Relevanzparameter 22 der entsprechenden Strahlungsintensität 18 auf den Wert eins.

Eine Gesamtbräunung des Garguts 14 wird schließlich als Mittel der von den Sensoren 16 ermittelten Bräunungsgrade bestimmt, wobei in die Mittelung nur diejenigen Werte mit den Relevanzparametern 22 mit dem Wert 1 einbezogen werden. Ist eine gewünschte Soll-Bräunung erreicht, deaktiviert sich das Gargerät 42 selbsttätig und/oder gibt dem Bediener ein Signal. Der Bediener kann die Soll-Bräunung während des Betriebs modifizieren bzw. in Richtung heller oder dunkler verstellen. Die vom Bediener eingestellte Soll-Bräunung kann auch gespeichert werden. Neben der Soll-Bräunung können auch Bräunungskurvenverläufe gespeichert werden.

Figur 6 zeigt verschiedene Spektren einer vom Gargut 14 diffus reflektierten elektromagnetischen Strahlung bzw. eine spektrale diffuse Reflexion R in Prozent in Abhängigkeit von einer Wellenlänge λ in Nanomenter. Es ist erkennbar, dass die Strahlungsintensität 18 in einem blauen Spektralbereich 28 der Messstrahlung starke relative Änderungen erfährt, während eine relative Änderung einer Referenz-Strahlungsintensität 36 in einem infraroten Spektralbereich 30 vergleichsweise gering ist, auch wenn die absoluten Änderungen der Strahlungsintensitäten 18, 36 sich eher umgekehrt verhalten. Der Graph 64 zeigt das Spektrum der diffusen Reflexion R eines Flachkuchens nach 7 Minuten Garzeit, der Graph 66 zeigt das entsprechende Spektrum nach 18 Minuten Garzeit, und der Graph 68 zeigt das entsprechende Spektrum nach 23 Minuten Garzeit. Es wird deutlich, dass die Absorption mit der Garzeit zunimmt, das Gargut 14 also dunkler erscheint.

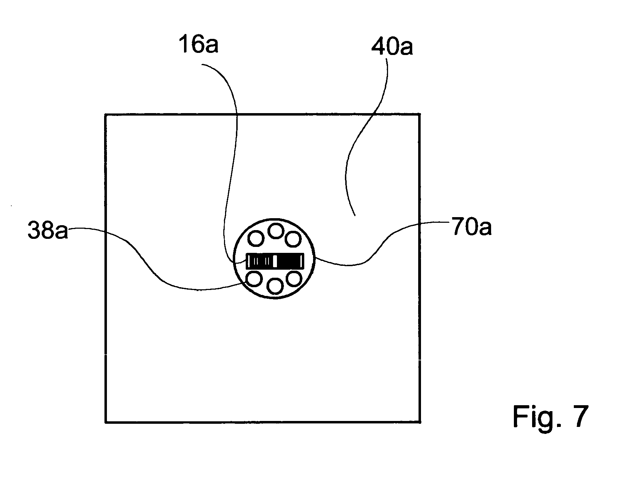

Figur 7 zeigt eine Decke 40a eines alternativen Gargeräts in einer Ansicht von unten. Analoge Merkmale sind mit den gleichen Bezugszeichen versehen, wobei zur Unterscheidung der Ausführungsbeispiele im alternativen Gargerät der Buchstabe a hinzugefügt wurde. Die Beschreibung beschränkt sich auf Unterschiede zu dem in den Figuren 1 - 6 dargestellten Ausführungsbeispiel. Im Hinblick auf gleich bleibende Merkmale wird auf die Beschreibung zu den Figuren 1 - 6 verwiesen.

In die Decke 40a ist eine Baugruppe 70a eingelassen, die Sensoren 16a und Strahlereinheiten 38a umfasst. Die Sensoren 16a und die Strahlereinheiten 38a sind auf einer gemeinsamen Trägerplatine aufgebracht. Ferner ist eine Garraumbeleuchtung in die Baugruppe 70a integriert.

Bezugszeichen

| | |
|---|---|
| 10 | Datenverarbeitungseinheit |
| 12 | Garraum |
| 14 | Gargut |
| 16 | Sensor |
| 18 | Strahlungsintensität |
| 20 | Referenzsignal |
| 22 | Relevanzparameter |
| 24 | Bräunungsgrad |
| 26 | Verhältnis |
| 28 | Spektralbereich |
| 30 | Spektralbereich |
| 32 | Vergleichseinheit |
| 34 | Soll-Bräunungsgrad |
| 36 | Referenz-Strahlungsintensität |
| 38 | Strahlereinheit |
| 40 | Decke |
| 42 | Gargerät |
| 44 | Speichereinheit |
| 46 | Differenzbildungsschritt |
| 48 | Backblech |
| 50 | Differenz |
| 52 | Multiplikationsschritt |
| 54 | Zusammenfassungsschritt |
| 56 | Strahlungsintensität |
| 58 | Anzeigeeinheit |
| 60 | Schritt |
| 62 | Schritt |
| 64 | Graph |
| 66 | Graph |
| 68 | Graph |
| 70 | Baugruppe |
| R | Reflexion |

λ    Wellenlänge

U    Messspannung

**Patentansprüche**

1.  Sensorvorrichtung mit einer Datenverarbeitungseinheit (10) zum Bestimmen eines Bräunungsgrads (24) eines in einem Garraum (12) angeordneten Garguts (14) und mit wenigstens einem Sensor (16) zum Erfassen einer vom Gargut (14) reflektierten Strahlungsintensität (18), **dadurch gekennzeichnet, dass** die Datenverarbeitungseinheit (10) zum Bestimmen eines Relevanzparameters (22) für eine Kenngröße der erfassten Strahlungsintensität (18) abhängig von dem zeitlichen Verlauf der erfassten Strahlungsintensität (18) vorgesehen ist, wobei die Datenverarbeitungseinheit (10) dazu vorgesehen ist, eine der erfassten Strahlungsintensitäten (18) abhängig von dem Relevanzparameter (22) von der Bestimmung des Bräunungsgrads (24) auszuschließen.

2.  Sensorvorrichtung nach Anspruch 1, **dadurch gekennzeichnet, dass** die Datenverarbeitungseinheit (10) dazu vorgesehen ist, ein Verhältnis (26) zwischen der erfassten Strahlungsintensität (18) und wenigstens einem Referenzsignal (20) zu bilden.

3.  Sensorvorrichtung nach einem der vorhergehenden Ansprüche, **dadurch gekennzeichnet, dass** die Sensoren (16) zum Erfassen von zumindest zwei Strahlungsintensitäten (18, 36) aus unterschiedlichen Spektralbereichen (28, 30) vorgesehen sind.

4.  Sensorvorrichtung nach den Ansprüchen 2 und 3, **dadurch gekennzeichnet, dass** das Referenzsignal (20) durch eine erfasste Strahlungsintensität in einem Referenz-Spektralbereich (30) gebildet ist.

5.  Sensorvorrichtung nach Anspruch 4, **dadurch gekennzeichnet, dass** der Referenz-Spektralbereich (30) Wellenlängen zwischen 800 nm und 1000 nm umfasst.

6.  Sensorvorrichtung nach einem der vorhergehenden Ansprüche, **dadurch gekennzeichnet, dass** die Datenverarbeitungseinheit (10) dazu vorgesehen ist, aus einer Vielzahl von Kenngrößen für erfasste Strahlungsintensitäten (18) eine Kenngröße mit einer maximalen Änderungsrate auszuwählen.

7.  Sensorvorrichtung nach einem der vorhergehenden Ansprüche, **dadurch gekennzeichnet, dass** die Datenverarbeitungseinheit (10) eine Vergleichseinheit (32) zum Vergleichen eines erfassten Bräunungsgrads (24) mit einem Soll-Bräunungsgrad (34) umfasst.

8.  Sensorvorrichtung nach einem der vorhergehenden Ansprüche, **dadurch gekennzeichnet, dass** die Datenverarbeitungseinheit (10) zum Bilden einer Differenz (50) zwischen der erfassten Strahlungsintensität (18) und einer ReferenzStrahlungsintensität (36) vorgesehen ist.

9.  Sensorvorrichtung nach einem der vorhergehenden Ansprüche, **gekennzeichnet durch** eine Vielzahl von an einer Decke (40) des Garraums (12) angeordneten Strahlereinheiten (38).

10. Sensorvorrichtung nach einem der vorhergehenden Ansprüche, **dadurch gekennzeichnet, dass** die Sensoren (16) linienförmig in einer Decke (40) des Garraums (12) angeordnet sind.

11. Sensorvorrichtung nach Anspruch 9, **gekennzeichnet durch** zumindest 16 Sensoren (16) zum Erfassen jeweils einer vom Gargut (14) reflektierten Strahlungsintensität (18).

12. Sensorvorrichtung nach einem der vorhergehenden Ansprüche, **dadurch gekennzeichnet, dass** die Datenverarbeitungseinheit (10) zum Bestimmen eines Bräunungsgrads (24) die erfassten Strahlungsintensitäten (18) mit dem Relevanzparameter (22) gewichtet.

13. Verfahren zum Bestimmen eines Bräunungsgrads (24) eines in einem Garraum (12) angeordneten Garguts (14) aus zumindest einer von einem Sensor (16) erfassten und vom Gargut (14) reflektierten Strahlungsintensität (18), **dadurch gekennzeichnet, dass** ein Relevanzparameter (22) für eine Kenngröße der erfassten Strahlungsintensität (18) abhängig von dem zeitlichen Verlauf der erfassten Strahlungsintensität (18) bestimmt wird, wobei die Datenverarbeitungseinheit (10) dazu vorgesehen ist, eine der erfassten Strahlungsintensitäten (18) abhängig von dem Relevanzparameter (22) von der Bestimmung des Bräunungsgrads (24) auszuschließen.

**Claims**

1.  Sensor device with a data processing unit (10) for determining a degree of browning (24) of cooking stock (14) arranged in a cooking space (12) and with at least one sensor (16) for detecting a radiation intensity (18) reflected by the cooking stock (14), **characterised in that** the data processing unit (10) is provided for determining a relevance parameter (22) for a characteristic magnitude of the detected radiation intensity (18) in dependence on the time course of the detected radiation intensity (18), wherein the data processing unit (10) is provided for the purpose of excluding from the determination of the degree of browning (24) one of the detected radiation intensities (18) in dependence on the relevance parameter (22).

2. Sensor device according to claim 1, **characterised in that** the data processing unit (10) is provided for the purpose of forming a ratio (26) between the detected radiation intensity (18) and at least one reference signal (20).

3. Sensor device according to one of the preceding claims, **characterised in that** the sensors (16) are provided for detecting at least two radiation intensities (18, 36) from different spectral ranges (28, 30).

4. Sensor device according to claims 2 and 3, **characterised in that** the reference signal (20) is formed by a detected radiation intensity in a reference spectral range (30).

5. Sensor device according to claim 4, **characterised in that** the reference spectral range (30) comprises wavelengths between 800 nm and 1000 nm.

6. Sensor device according to any one of the preceding claims, **characterised in that** the data processing unit (10) is provided for the purpose of selecting, from a plurality of characteristic magnitudes for detected radiation intensities (18), a characteristic magnitude with a maximum rate of change.

7. Sensor device according to any one of the preceding claims, **characterised in that** the data processing unit (10) comprises a comparison unit (32) for comparing a detected degree of browning (24) with a target degree of browning (34).

8. Sensor device according to any one of the preceding claims, **characterised in that** the data processing unit (10) is provided for forming a difference (50) between the detected radiation intensity (18) and a reference radiation intensity (36).

9. Sensor device according to any one of the preceding claims, **characterised by** a plurality of radiator units (38) arranged at a ceiling (40) of the cooking space (12).

10. Sensor device according to any one of the preceding claims, **characterised in that** the sensors (16) are arranged linearly in a ceiling (40) of the cooking space (12).

11. Sensor device according to claim 9, **characterised by** at least 16 sensors (16) each for detecting a respective radiation intensity (18) reflected by the cooking stock (14).

12. Sensor device according to any one of the preceding claims, **characterised in that** the data processing unit (10) weights the detected radiation intensities (18) with the relevance parameter (22) for determination of a degree of browning (24).

13. Method of determining a degree of browning (24) of cooking stock (14), which is arranged in a cooking space (12), from at least one radiation intensity (18) detected by a sensor (16) and reflected by the cooking stock (14), **characterised in that** a relevance parameter (22) for a characteristic magnitude of the detected radiation intensity (18) is determined in dependence on the course over time of the detected radiation intensity (18), wherein the data processing unit (10) is provided for the purpose of excluding from the determination of the degree of browning (24) one of the detected radiation intensities (18) in dependence on the relevance parameter (22).

## Revendications

1. Dispositif capteur comprenant une unité de traitement de données (10) pour déterminer un degré de brunissement (24) d'un article à cuire (14) disposé dans un espace de cuisson (12) et au moins un capteur (16) pour enregistrer une intensité de rayonnement (18) réfléchie par l'article à cuire (14), **caractérisé en ce que** l'unité de traitement de données (10) est prévue pour déterminer un paramètre d'importance (22) pour une grandeur caractéristique de l'intensité de rayonnement (18) enregistrée en fonction de l'évolution dans le temps de l'intensité de rayonnement (18) enregistrée, l'unité de traitement de données (10) étant prévue pour exclure l'une des intensités de rayonnement (18) enregistrées en fonction du paramètre d'importance (22) de la détermination du degré de brunissement (24).

2. Dispositif capteur selon la revendication 1, **caractérisé en ce que** l'unité de traitement de données (10) est prévue pour former un rapport (26) entre l'intensité de rayonnement (18) enregistrée et au moins un signal de référence (20).

3. Dispositif capteur selon l'une quelconque des revendications précédentes, **caractérisé en ce que** les capteurs (16) sont prévus pour l'enregistrement d'au moins deux intensités de rayonnement (18, 36) à partir de différentes plages spectrales (28, 30).

4. Dispositif capteur selon les revendications 2 et 3, **caractérisé en ce que** le signal de référence (20) est formé par une intensité de rayonnement enregistrée dans une plage spectrale de référence (30).

**5.** Dispositif capteur selon la revendication 4, **caractérisé en ce que** la plage spectrale de référence (30) comprend des longueurs d'onde comprises entre 800 nm et 1 000 nm.

**6.** Dispositif capteur selon l'une quelconque des revendications précédentes, **caractérisé en ce que** l'unité de traitement de données (10) est prévue pour choisir une grandeur caractéristique avec un taux de modification maximal à partir d'une pluralité de grandeurs caractéristiques pour des intensités de rayonnement (18) enregistrées.

**7.** Dispositif capteur selon l'une quelconque des revendications précédentes, **caractérisé en ce que** l'unité de traitement de données (10) comprend une unité de comparaison (32) pour la comparaison d'un degré de brunissement (24) enregistré avec un degré de brunissement théorique (34).

**8.** Dispositif capteur selon l'une quelconque des revendications précédentes, **caractérisé en ce que** l'unité de traitement de données (10) est prévue pour former une différence (50) entre l'intensité de rayonnement (18) enregistrée et une intensité de rayonnement de référence (36).

**9.** Dispositif capteur selon l'une quelconque des revendications précédentes, **caractérisé par** une pluralité d'unités de rayonnement (38) disposées sur un plafond (40) de l'espace de cuisson (12).

**10.** Dispositif capteur selon l'une quelconque des revendications précédentes, **caractérisé en ce que** les capteurs (16) sont disposés en forme de ligne dans un plafond (40) de l'espace de cuisson (12).

**11.** Dispositif capteur selon la revendication 9, **caractérisé par** au moins 16 capteurs (16) pour l'enregistrement de respectivement une intensité de rayonnement (18) réfléchie par l'article à cuire (14).

**12.** Dispositif capteur selon l'une quelconque des revendications précédentes, **caractérisé en ce que** l'unité de traitement de données (10) pondère les intensités de rayonnement (18) enregistrées avec le paramètre d'importance (22) pour déterminer un degré de brunissement (24).

**13.** Procédé pour déterminer un degré de brunissement (24) d'un article à cuire (14) disposé dans l'espace de cuisson (12) à partir d'au moins une intensité de rayonnement (18) enregistrée par un capteur (16) et réfléchie par l'article à cuire (14), **caractérisé en ce qu'**un paramètre d'importance (22) pour une grandeur caractéristique de l'intensité de rayonnement (18) enregistrée est déterminé en fonction de la variation dans le temps de l'intensité de rayonnement (18) enregistrée, l'unité de traitement de données (10) étant prévue pour exclure du calcul du degré de brunissement (24) l'une des intensités de rayonnement (18) enregistrées en fonction du paramètre d'importance (22).

Fig. 1

Fig. 2

**Fig. 3**

**Fig. 4**

Fig. 5

Fig. 6

16a    40a

38a    70a

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0103558 A1
- EP 0682243 A